# EUROPÄISCHE PATENTANMELDUNG

(11) **EP 4 762 901 A1**
(43) Veröffentlichungstag der Anmeldung: **24.06.2026**
(21) Anmeldenummer: 25222479.5
(22) Anmeldetag: 11.12.2025
(51) Int. Cl.: A01C 15/00, A01C 15/04, A01C 15/12

(54) **PNEUMATISCHER DÜNGERSTREUER UND VERFAHREN ZUM FÖRDERN VON VERTEILGUT**

(30) Priorität: 18.12.2024 DE 102024138604
(71) Anmelder: HORSCH LEEB Application Systems SE & Co. KG, 94405 Landau a.d. Isar (DE)
(72) Erfinder: Köbler, Manfred, 94405 Landau an der Isar (DE)
(74) Vertreter: v. Bezold & Partner Patentanwälte - PartG mbB

(57) **Zusammenfassung**

Die Erfindung betrifft einen pneumatischen Düngerstreuer (1) zum Ausbringen von körnigem Verteilgut auf eine landwirtschaftliche Fläche (LF), zumindest umfassend einen Vorratsbehälter (3) zum Mitführen und/oder Bereitstellen des Verteilguts, wobei der Vorratsbehälter (3) zumindest zwei Kammern (23, 24, 25) mit jeweils zumindest einer Auslassöffnung (7) aufweist, wobei die Auslassöffnungen (7) mit zumindest einer, mittels einer Konfigurationseinheit (26) veränderbaren, Fördereinrichtung (19) gekoppelt sind, und wobei in der Konfigurationseinheit (26) ein Mengenverhältnis an Verteilgut hinterlegbar ist,
Die Erfindung zeichnet sich dadurch aus, dass die Konfigurationseinheit (26) eingerichtet ist, die zumindest eine veränderbare Fördereinrichtung (19) anhand des Mengenverhältnisses zu verändern.

## Beschreibung

Die Erfindung betrifft einen pneumatischen Düngerstreuer mit den Merkmalen des Oberbegriffs des unabhängigen Anspruches 1. Die Erfindung betrifft weiter ein Verfahren zum Fördern von Verteilgut.

Aus dem Stand der Technik sind Düngerstreuer bekannt, welche einen Vorratsbehälter zur Aufnahme eines einzigen Düngemittels aufweisen. Somit kann lediglich ein einziges Düngemittel auf einer landwirtschaftlichen Fläche ausgebracht werden.

Aufgabe der Erfindung ist es somit, die beschriebenen Nachteile des Standes der Technik zu beseitigen. Insbesondere soll ein entsprechender pneumatischer Düngerstreuer bereitgestellt werden, mittels welchem Verteilgut auf der landwirtschaftlichen Fläche ausgebracht werden kann.

Diese Aufgaben werden gelöst durch einen pneumatischen Düngerstreuer mit den Merkmalen des unabhängigen Anspruch 1 sowie durch ein Verfahren mit den Merkmalen des Verfahrensanspruch 12. Vorteilhafte Ausführungsformen und Weiterbildungen der Erfindung sind in den Ansprüchen und der folgenden Beschreibung unter teilweiser Bezugnahme auf die Figuren offenbart.

Erfindungsgemäß ist ein pneumatischer Düngerstreuer zum Ausbringen von körnigem Verteilgut auf eine landwirtschaftliche Fläche vorgesehen, zumindest umfassend einen Vorratsbehälter zum Mitführen und/oder Bereitstellen des Verteilguts, wobei der Vorratsbehälter zumindest zwei Kammern mit jeweils zumindest einer Auslassöffnung aufweist, wobei die Auslassöffnungen mit zumindest einer, mittels einer Konfigurationseinheit veränderbaren, Fördereinrichtung gekoppelt sind, und wobei in der Konfigurationseinheit ein Mengenverhältnis an Verteilgut hinterlegbar ist.

Bevorzugt kann es vorgesehen, dass der Vorratsbehälter in einem unteren Bereich zumindest zwei sich verjüngende und in Fahrtrichtung hintereinander angeordnete Bereiche aufweist, wobei jeder der verjüngenden Bereiche zumindest eine der Auslassöffnungen aufweist.

Durch das Vorsehen von sich verjüngenden Bereichen kann die Entleerung des Vorratsbehälters verbessert werden, insbesondere kann die Gefahr des Zurückbleibens von Verteilgut in dem Tank verringert werden.

Gemäß einer bevorzugten Ausführungsform kann es vorgesehen sein, dass die Auslassöffnungen in Fahrtrichtung gesehen voneinander beabstandet sind. Hierdurch kann eine verbesserte, über die Länge des Vorratsbehälters in Fahrtrichtung gesehen, Entleerung des Vorratsbehälters erreicht werden.

Bevorzugt kann es vorgesehen sein, dass die zu den Auslassöffnungen gehörigen verjüngenden Bereiche miteinander gekoppelt sind. Vorzugsweise sind die verjüngenden Bereiche derart miteinander gekoppelt, dass ein Nachfließen des Verteilguts zu der jeweiligen Auslassöffnung gewährleistet ist. Das heißt, dass der untere Bereich derart ausgebildet ist, dass der untere Bereich frei ist von Bereichen, in welchen sich Verteilgut ansammeln kann und nicht zu einer der Auslassöffnungen fließen kann.

Gemäß einer bevorzugten Ausführungsform kann es vorgesehen sein, dass zumindest einer, bevorzugt jeder, der sich verjüngenden Bereiche zumindest eine schräge Fläche aufweist, welche in einem Winkel, vorzugsweise einem spitzen Winkel, zu einer horizontalen Ebene angeordnet ist. Bevorzugt beträgt der Winkel mehr als 0°. Bevorzugt beträgt der Winkel zwischen 5° und 85°, bevorzugter 10° bis 75°, und weiter bevorzugt zwischen 15° und 65°, und besonders bevorzugt zumindest 20°. Alternativ oder kumulativ kann die schräge Fläche zumindest eine Krümmung aufweisen. Durch das Vorsehen zumindest einer schrägen Fläche kann das Nachfließen des Verteilguts verbessert werden.

Erfindungsgemäß ist es vorgesehen, dass der Vorratsbehälter zumindest zwei Kammern aufweist. Bevorzugt kann in jeder Kammer Verteilgut bevorratet sein.

Bevorzugt sind die Kammern voneinander getrennt. Das heißt, dass das Verteilgut der einen Kammer sich nicht mit Verteilgut aus anderen Kammern innerhalb des Vorratsbehälters vermischen kann, es sei denn, dass eine dafür eingerichtete Vorrichtung vorhanden ist. Durch das Vorsehen von zumindest zwei Kammern kann es ermöglicht werden, verschiedene Verteilgüter zu bevorraten, und/oder eine spezifische Entleerung des Vorratsbehälters zu erreichen, beispielsweise, um eine möglichst optimale Gewichtsverteilung über die Länge und/oder Breite des Vorratsbehälters bzw. des Düngerstreuers zu erhalten. Beispielsweise können immer positive Stützlast erreicht werden. Bevorzugt ist die Konfigurationseinheit eingerichtet, eine Entnahme von Verteilgut aus mehreren Kammern aufeinander abzustimmen, bevorzugt anhand einer momentanen Stützlast. Bevorzugt ist eine Sensorik vorgesehen, welche eingerichtet ist, eine momentane Stützlast zu erfassen und der Konfigurationseinheit bereitzustellen. Bevorzugt kann die Konfigurationseinheit eingerichtet sein, die Stützlast anhand eines Gewichtsverhältnisses des Verteilguts in den Kammern und der Geometrie des Düngerstreuers die momentane Stützlast zu ermitteln.

Besonders bevorzugt kann es vorgesehen sein, dass jeder Kammer zumindest einer der sich verjüngenden Bereiche zugeordnet ist. Hierdurch kann eine Entleerung bzw. Entnahme von Verteilgut aus der jeweiligen Kammer ermöglicht sein.

Gemäß einer weiteren bevorzugten Ausführungsform kann es vorgesehen sein, dass der Vorratsbehälter eingerichtet ist, dass zumindest eine der Kammern in seiner Größe veränderbar ist. Bevorzugt können Trennwände vorgesehen sein, welche eingerichtet sind, den Vorratsbehälter in Kammern aufzuteilen. Bevorzugt können die Trennwände fest mit dem Vorratsbehälter verbunden sein. Alternativ oder kumulativ können die Trennwände lösbar mit dem Vorratsbehälter verbunden sein. Hierdurch kann die jeweilige Trennwand aus dem Vorratsbehälter entnommen werden. Hierdurch kann die Geometrie des Vorratsbehälters angepasst werden. Bevorzugt kann es vorgesehen sein, dass der Vorratsbehälter und/oder die Kammern manuell veränderbar sind.

Der pneumatische Düngerstreuer zeichnet sich erfindungsgemäß dadurch aus, dass die Konfigurationseinheit eingerichtet ist, die zumindest eine veränderbare Fördereinrichtung anhand des Mengenverhältnisses zu verändern. Bevorzugt kann das Verändern der zumindest einen Fördereinrichtung ein Steuern und/oder Regeln der zumindest einen Fördereinrichtung umfassen.

Bevorzugt ist die zumindest eine Fördereinrichtung eingerichtet, Verteilgut aus den zumindest zwei Kammern zu entnehmen. Weiter bevorzugt ist die zumindest eine Fördereinrichtung eingerichtet, Verteilgut zu fördern. Vorzugsweise ist die Fördereinrichtung mit einem Verteilgestänge des pneumatischen Düngerstreuers wirktechnisch verbunden und eingerichtet, Verteilgut in Richtung des Verteilgestänges zu fördern.

Bevorzugt umfasst der pneumatische Düngerstreuer eine Sensorik, welche eingerichtet ist, die jeweilig entnommene Menge an Verteilgut zu erfassen. Das heißt, die Sensorik erfasst, welche Menge tatsächlich der jeweiligen Kammer entnommen wird. Bevorzugt kann die Sensorik ein Wiegesystem zum Wiegen von Verteilgut, vorzugsweise für jede der zumindest zwei Kammern, umfassen; ein Füllstandsmessungssysstem zum Ermitteln eines Füllstands, vorzugsweise für jede der zumindest zwei Kammern; ein Durchflussmessungssystem zum Ermitteln eines Verteilgutflusses, vorzugsweise an der jeweiligen Auslassöffnung; und/oder dergleichen.

Bevorzugt umfasst der pneumatische Düngerstreuer das Verteilgestänge. Das Verteilgestänge ist ein sich quer zu einer Fahrtrichtung erstreckendes Verteilgestänge, wobei das Verteilgestänge mehrere, bevorzugt zumindest eine Auslassöffnung aufweisende, Verteilleitungen mit Verteilelementen aufweist, welche Verteilleitungen zur Förderung des Verteilguts mit einem, mittels der Strömungserzeugungseinrichtung erzeugtem, Luftvolumenstrom beaufschlagbar sind.

Bevorzugt ist die Konfigurationseinheit eingerichtet, dass das Mengenverhältnis durch eine manuelle Benutzereingabe und/oder automatisch vorgebbar ist. Bevorzugt kann eine manuelle Benutzereingabe eine Eingabe eines bestimmten Werts des Mengenverhältnisses, beispielsweise an einem Terminal oder dergleichen, sein. Alternativ oder kumulativ kann das Mengenverhältnis anhand einer Applikationskarte vorgebbar sein. Alternativ oder kumulativ kann eine Sensoreinrichtung vorgesehen sein, welche eingerichtet ist, Informationen eines Pflanzenbestands zu erfassen und der Konfigurationseinheit übermitteln, wobei die Konfigurationseinheit eingerichtet ist, das Mengenverhältnis anhand der erfassten Informationen des Pflanzenbestands zu ermitteln.

Bevorzugt ist die zumindest eine Fördereinrichtung eingerichtet, Verteilgut aus den zumindest zwei Kammern zu entnehmen, insbesondere anhand des Mengenverhältnisses. Durch das Mengenverhältnis kann angegeben sein, welche Menge an Verteilgut aus der jeweiligen Kammer entnommen werden soll.

Bevorzugt kann die zumindest eine Fördereinrichtung als eine mechanisch und/oder pneumatisch arbeitende Fördereinrichtung ausgebildet sein. Beispielsweise kann die zumindest eine Fördereinrichtung zumindest einen Stetigförderer umfassen, vorzugsweise zumindest einen mechanischen Stetigförderer und/oder zumindest einen pneumatischen Stetigförderer.

Gemäß einer bevorzugten Ausführungsform kann es vorgesehen sein, dass die Konfigurationseinheit eingerichtet ist, anhand des Mengenverhältnisses eine Entnahme von Verteilgut aus den jeweiligen Kammern durch ein Verändern der zumindest eine veränderbaren Fördereinrichtung zu verändern.

Je nachdem welches Mengenverhältnis vorgegeben ist, ist die zumindest eine Fördereinrichtung bevorzugt eingerichtet, eine erste Menge an Verteilgut aus einer ersten Kammer und eine zweite Menge an Verteilgut aus einer zweiten Kammer zu entnehmen. Gleiches gilt analog für gegebenenfalls weitere Kammern des Vorratsbehälters.

Bevorzugt ist die Entnahme von Verteilgut bezogen auf eine Menge an Verteilgut, welche pro Zeiteinheit aus der jeweiligen Kammer entnommen wird.

Bevorzugt umfasst die zumindest eine Fördereinrichtung zumindest einen Antrieb zum Betreiben der Fördereinrichtung. Bevorzugt kann der zumindest eine Antrieb ein elektrischer, pneumatischer und/oder hydraulischer Antrieb sein. Bevorzugt ist die Konfigurationseinheit eingerichtet, die zumindest eine Fördereinrichtung anhand einer Veränderung des zumindest einen Antriebs zu verändern.

Gemäß einer weiteren bevorzugten Ausführungsform kann es vorgesehen sein, dass die zumindest zwei Kammern mittels der zumindest einen veränderbaren Fördereinrichtung derart gekoppelt sind, dass die Verteilgüter der zumindest zwei Kammern vermischbar sind, vorzugsweise anhand eines Mischungsverhältnisses vermischbar sind.

Bevorzugt ist die zumindest eine Fördereinrichtung eingerichtet, die Verteilgüter der zumindest zwei Kammern zu vermischen. Das heißt, dass das aus den jeweiligen Kammern entnommene Verteilgut innerhalb der Fördereinrichtung vermischbar ist. Bevorzugt ist die Fördereinrichtung eingerichtet, aus den jeweiligen Kammern entnommenes Verteilgut zu vermischen. Bevorzugt ist die zumindest eine Fördereinrichtung eingerichtet, dass das jeweilige Verteilgut der Kammern in der zumindest einen Fördereinrichtung vermischbar ist.

Alternativ oder kumulativ ist die Fördereinrichtung mit zumindest einem Mischbehälter gekoppelt und eingerichtet, das jeweilige Verteilgut zu dem zumindest einen Mischbehälter zu fördern. Bevorzugt ist der zumindest eine Mischbehälter eingerichtet, das von der zumindest einen Fördereinrichtung zu dem Mischbehälter geförderte Verteilgut zu vermischen.

Gemäß einer weiteren bevorzugten Ausführungsform kann es vorgesehen sein, dass in den zumindest zwei Kammern das gleiche Verteilgut und/oder unterschiedliche Verteilgüter bereitstellbar sind. Durch Bereitstellen von unterschiedlichen Verteilgüter ist es möglich, eine Mischung, vorzugsweise mit einem Mischungsverhältnis, an Verteilgut zu erhalten. Dadurch kann auf verschiedene Gegebenheiten reagiert werden, vorzugsweise abhängig von dem Pflanzenbestand und/oder dergleichen. Durch ein Bereitstellen von gleichem Verteilgut in den Kammern kann eine spezifische Entleerung der Kammern bzw. des Vorratsbehälters erreicht werden, beispielsweise, um eine möglichst optimale Gewichtsverteilung über die Länge und/oder Breite des Vorratsbehälters bzw. des Düngerstreuers zu erhalten.

Beispielsweise kann eine positive Stützlast erreicht werden. Bevorzugt ist die Konfigurationseinheit eingerichtet, die zumindest eine Fördereinrichtung zur Entnahme des Verteilguts aus mehreren Kammern aufeinander abzustimmen, bevorzugt anhand einer momentanen Stützlast. Bevorzugt ist eine Sensorik vorgesehen, welche eingerichtet ist, eine momentane Stützlast zu erfassen und der Konfigurationseinheit bereitzustellen. Bevorzugt kann die Konfigurationseinheit eingerichtet sein, die Stützlast anhand eines Gewichtsverhältnisses des Verteilguts in den Kammern und der Geometrie des Düngerstreuers die momentane Stützlast zu ermitteln.

Gemäß einer weiteren bevorzugten Ausführungsform kann es vorgesehen sein, dass die zumindest eine Fördereinrichtung zumindest eine Dosiereinrichtung umfasst wobei die Dosiereinrichtung eingerichtet ist, Verteilgut in Verteilleitungen eines Verteilgestänges zu dosieren, vorzugsweise anhand des Mengenverhältnisses.

Gemäß einer weiteren bevorzugten Ausführungsform kann es vorgesehen sein, dass jeder der zumindest zwei Kammern zumindest eine Dosiereinrichtung zugeordnet ist. Bevorzugt ist die jeweilige Dosiereinrichtung eingerichtet, das Verteilgut, vorzugsweise der jeweiligen Kammer, zu dosieren, vorzugsweise volumetrisch und/oder gravimetrisch zu dosieren. Die jeweilige Dosiereinrichtung ist eingerichtet, das Verteilgut aus der Kammer bzw. dem Vorratsbehälter dosiert zu entnehmen, vorzugsweise mit einer variablen Verteilgutmenge.

Gemäß einer weiteren bevorzugten Ausführungsform kann es vorgesehen sein, dass eine Konfigurationseinheit vorgesehen ist, welche eingerichtet ist, die Dosiereinrichtungen anhand des Mengenverhältnisses und/oder einer auszubringenden Verteilgutmenge zu konfigurieren.

Bevorzugt ist die Konfigurationseinheit eingerichtet, die jeweilige Dosiereinrichtung zu konfigurieren, dass die jeweilige Dosiereinrichtung eine definierbare Menge des jeweiligen Verteilguts der jeweiligen Kammer dosiert, bevorzugt anhand des Mengenverhältnisses. Je nachdem wieviel Verteilgutmenge insgesamt und/oder Verteilgutmenge aus den jeweiligen Kammern ausgebracht werden soll, ist die Konfigurationseinheit eingerichtet, die jeweilige Dosiereinrichtung zu konfigurieren.

Besonders bevorzugt ist die Konfigurationseinheit eingerichtet, die Dosiereinrichtungen aufeinander abgestimmt zu konfigurieren, vorzugsweise anhand des Mengenverhältnisses und/oder des Mischungsverhältnisses zu konfigurieren.

Durch das Mengenverhältnis kann vorzugsweise bestimmt sein, wieviel Verteilgut aus der jeweiligen Kammer mittels der jeweiligen Dosiereinrichtung entnommen werden soll. Insbesondere kann dies vorteilhaft sein, wenn mehrere Kammern mit dem gleichen Verteilgut gefüllt sind. Hierdurch kann bestimmt werden, welche der Kammern zuerst entleert werden soll.

Bevorzugt sind die Dosiereinrichtungen jeder Kammer zumindest wirktechnisch miteinander verbunden.

Alternativ oder kumulativ kann es vorgesehen sein, dass eine Dosiereinrichtung dem zumindest einem Mischbehälter gekoppelt ist.

Bevorzugt kann die zumindest eine Dosiereinrichtung eingerichtet sein, Verteilgut volumetrisch und/oder gravimetrisch zu dosieren.

Bevorzugt kann die zumindest eine Dosiereinrichtung als zumindest ein Schneckenförderer, zumindest eine Zellenradschleuse, und/oder dergleichen ausgebildet sein.

Gemäß einer weiteren bevorzugten Ausführungsform kann es vorgesehen sein, dass die zumindest eine Dosiereinrichtung räumlich dem Verteilgestänge zugeordnet ist, vorzugsweise mit dem Verteilgestänge gekoppelt ist. Räumlich zugeordnet kann hierbei bedeuten, dass die zumindest eine Dosiereinrichtung in einem definierten und/oder definierbaren Bereich um das Verteilgestänge herum angeordnet ist; und/oder dass eine räumliche, vorzugsweise bauliche, Verbindung zwischen der Dosiereinrichtung und dem Verteilgestänge vorliegt.

Bevorzugt umfasst das Verteilgestänge eine Trägereinrichtung. Bevorzugt kann es vorgesehen sein, dass die zumindest eine Dosiereinrichtung mit der Trägereinrichtung gekoppelt ist.

Gemäß einer bevorzugten Ausführungsform kann es vorgesehen sein, dass das Verteilgestänge eine Trägereinrichtung umfasst, wobei die Trägereinrichtung mit einem Rahmengestell der Verteilmaschine gekoppelt ist, wobei die Trägereinrichtung eingerichtet ist, mittels einer Höhenverstelleinheit höhenverstellbar zu sein.

Bevorzugt kann die Trägereinrichtung einen Trägerrahmen aufweisen, mit welchem das Verteilgestänge gekoppelt ist.

Der Trägerrahmen kann derartig ausgeführt sein, dass bspw. ein Parallelogramm und/oder eine Lineareinheit angebaut werden kann. Zudem wäre es denkbar, dass wiederum der Vorratsbehälter und/oder das die Fördereinrichtung Bestandteil des Rahmengestells sind.

Bevorzugt kann die Konfigurationseinheit eingerichtet sein, eine Höhenlage des Verteilgestänges zu verändern, d.h. dass insbesondere vorgesehen sein kann, dass das Verteilgestänge höhenverstellbar zu einer landwirtschaftlichen Fläche und/oder zu einem Pflanzenbestand ist. Dies wird insbesondere durch eine Höhenverstellung des Verteilgestänges in Bezug auf das Rahmengestell erreicht. Die Höhenverstellung kann mittels eines zwischen dem Rahmengestell und der Trägereinrichtung angeordneten Parallelogramms oder einer Lineareinheit umgesetzt sein.

Dabei kann dem Parallelogramm oder der Lineareinheit zumindest ein Stellglied (z.B. ein oder mehrere hydraulisch und/oder pneumatisch betriebene Linearantriebe wie bspw. Zylinder oder dergI.) entsprechend zur Variation des Höhenabstands, d.h. zum Verschwenken des Parallelogramms oder zur Verstellung der Lineareinheit zugeordnet sein.

Das Parallelogramm und/oder die Lineareinheit können zweckmäßig Bestandteil des Verteilgestänges sein, bzw. kann insbesondere die Trägereinrichtung mit dem Parallellogramm und/oder der Lineareinheit verbunden sein.

Gemäß einer weiteren bevorzugten Ausführungsform kann es vorgesehen sein, dass das Verteilgestänge ein Gestängemittelteil aufweist, welches drehbar um eine in Fahrtrichtung orientierte Drehachse mit der Trägereinrichtung gekoppelt ist. Somit kann das Verteilgestänge aufgrund von Krafteinwirkungen auf des Verteilgestänge nachfolgen.

Bevorzugt ist die Konfigurationseinheit eingerichtet, das Verteilgestänge mittels der drehbaren Kopplung des Verteilgestänges an der Trägereinrichtung eine Drehlage des Verteilgestänges konfigurierbar ist. Vorzugsweise umfasst die Konfiguration der Drehlage des Verteilgestänges ein Steuern und/oder Regeln. Vorzugsweise ist eine Sensoreinrichtung vorgesehen und eingerichtet, die Drehlage des Verteilgestänges zu erfassen. Bevorzugt ist die Konfigurationseinheit eingerichtet, die Konfiguration der Drehlage anhand der erfassten Drehlage zu durchzuführen.

Vorzugsweise ist zumindest ein Stellglied vorgesehen, welches mit der Trägereinrichtung und dem Verteilgestänge gekoppelt ist, und wobei die Konfigurationseinheit eingerichtet ist, das Stellglied zu beeinflussen, vorzugsweise anhand der Drehlage des Verteilgestänges.

Bevorzugt ist die zumindest eine Dosiereinrichtung mit dem Verteilgestänge derart gekoppelt, dass bei Bewegungen des Verteilgestänges die zumindest eine Dosiereinrichtung dem Verteilgestänge nachfolgt.

Gemäß einer weiteren bevorzugten Ausführungsform kann es vorgesehen sein, dass die Konfigurationseinheit eingerichtet ist, die zumindest eine Fördereinrichtung anhand einer definierbaren Ausbringmenge und/oder einer Ist-Geschwindigkeit des Düngerstreuers zu verändern.

Die definierbare Ausbringmenge ist diejenige Menge, welche auf einer bestimmten Fläche ausgebracht werden soll, in Kilogramm pro Hektar angegeben. Verändert sich die Ausbringmenge, so muss entsprechend weniger Verteilgut, pro Zeiteinheit, aus den Kammern entnommen werden.

Die Ist-Geschwindigkeit des Düngerstreuers hat einen Einfluss darauf, wie schnell Verteilgut auf die landwirtschaftliche Fläche ausgebracht werden soll. Dadurch, dass in einer gleichen Zeiteinheit mehr bzw. weniger Fläche mit Verteilgut appliziert wird, muss dementsprechend die aus den Kammern entnommene Menge an Verteilgut daran angepasst werden.

Bevorzugt kann anhand einer manuelle Benutzereingabe die definierbare Ausbringmenge an die Konfigurationseinheit übermittelt werden.

Gemäß einer weiteren bevorzugten Ausführungsform kann es vorgesehen sein, dass die Konfigurationseinheit eingerichtet ist, das Mengenverhältnis der Konfigurationseinheit durch manuelle Vorgabe zu erhalten, und/oder dass die Konfigurationseinheit eingerichtet ist, automatisch das Mengenverhältnis zu verändern, vorzugsweise anhand einer teilflächenspezifischen Vorgabe und/oder einer mit dem Düngerstreuer gekoppelten Sensorik.

Unter der teilflächenspezifischen Angabe kann beispielsweise eine Applikationskarte verstanden sein, und/oder Berücksichtigung des Pflanzenbestands, und/oder der Bodeneigenschaften. Die Sensoreinrichtung ist bevorzugt eingerichtet, Informationen eines Pflanzenbestands zu erfassen und der Konfigurationseinheit zu übermitteln, wobei die Konfigurationseinheit eingerichtet ist, das Mengenverhältnis anhand der erfassten Informationen des Pflanzenbestands zu ermitteln.

Gemäß einer weiteren bevorzugten Ausführungsform kann es vorgesehen sein, dass die Konfigurationseinheit eingerichtet ist, das Mengenverhältnis anhand einer Ist-Position des pneumatischen Düngerstreuers zu verändern.

Bevorzugt umfasst der Düngerstreuer zumindest eine Positionserfassungseinheit, welche eingerichtet ist, die Ist-Position des Düngerstreuers auf der landwirtschaftlichen Fläche zu erfassen. Bevorzugt kann die Positionserfassungseinheit anhand von GNSS-Daten, beispielsweise GPS, DGPS, Glonass, und/oder dergleichen, die Ist-Position des Düngerstreuers erfassen. Alternativ oder kumulativ kann die Positionserfassungseinheit basierend auf RTK-Daten die Ist-Position des Düngerstreuers erfassen.

Bevorzugt kann es vorgesehen sein, dass die Konfigurationseinheit eingerichtet ist, vorauseilend die zumindest eine Fördereinrichtung zu verändern, vorzugsweise anhand der Ist-Position des Düngerstreuers. Bevorzugt kann es vorgesehen sein, dass die Konfigurationseinheit eingerichtet ist, das optimale Positionen zum Verändern der zumindest einen Fördereinrichtung zu ermitteln.

Bevorzugt kann ein vorauseilendes Ermitteln der optimalen Positionen zum Verändern der zumindest einen Fördereinrichtung abhängig von einer Ist-Geschwindigkeit des Düngerstreuers, einer Ist-Position des Düngerstreuers, der Verteilgutmenge, einer Förderzeit des Verteilguts, dem erzeugten Luftvolumenstrom, und/oder dergleichen sein.

Darüber hinaus können Reaktionszeiten berücksichtigt werden, das heißt diejenige Zeit, welche das System benötigt, eine Veränderung der zumindest einen Fördereinrichtung durchzuführen. Dies kann abhängig sein von Übertragungszeiten von entsprechenden Signalen, Trägheiten von entsprechenden Stellgliedern und/oder dergleichen. Durch Berücksichtigung der Reaktionszeiten kann die zumindest eine Fördereinrichtung vorauseilend angepasst werden, vorzugsweise mittels der Konfigurationseinheit.

Gelöst wird die zugrunde liegende Aufgabe ebenfalls durch ein Verfahren zum Betreiben eines pneumatischen Düngerstreuers, umfassend die Verfahrensschritte:
- Bereitstellen eines pneumatischen Düngerstreuers, vorzugsweise gemäß einer beschriebenen Ausführungsform, umfassend einen Vorratsbehälter mit zumindest zwei Kammern mit jeweils einer Auslassöffnung, welche mit zumindest einer Fördereinrichtung gekoppelt sind, und Hinterlegen eines Mengenverhältnisses von Verteilgut in einer Konfigurationseinheit;
- Verändern der zumindest einen Fördereinrichtung anhand des Mengenverhältnisses mittels der Konfigurationseinheit.

Im Kontext der Erfindung können die jeweiligen Schritte des Verfahrens in einer festgelegten Abfolge ausgeführt werden, wobei es optional jedoch auch denkbar ist, dass die Schritte des Verfahrens in einer beliebigen Abfolge durchgeführt werden können. Auch ein beliebiger Wechsel zwischen den Verfahrensschritten ist denkbar. Zudem ist auch eine Ergänzung des Verfahrens um weiteres Verfahrensschritte denkbar.

Bevorzugt werden die Schritte des Verfahrens kontinuierlich ausgeführt und/oder interwallweise ausgeführt.

Die Konfigurationseinheit weist bspw. eine Rechnereinheit, einen Bordcomputer und/oder dergl. auf und umfasst bevorzugt einen Steuer- und/oder Regelkreis, insbesondere einen hydraulischen und/oder pneumatischen und/oder elektrischen Steuer- und/oder Regelkreis, wobei der Steuer- und/oder Regelkreis zweckmäßig zur hydraulischen und/oder pneumatischen und/oder elektrischen Signal- und/oder Befehlsübertragung ausgebildet ist. Welche Signal- und/oder Befehlsübertragung auch drahtlos (z.B. mittels WLAN) erfolgen kann.

Im Kontext der Erfindung umfasst der Begriff der Konfigurationseinheit, insbesondere die Gesamtheit der Bauteile zur Signal- und/oder Befehlsübertragung. Dementsprechend auch Rechnereinheiten, CPU's und/oder dergl. Ebenso umfasst sind entsprechend auch in den jeweiligen Sensoren oder Sensoreinheiten oder Sensoranordnungen integrierte Steuereinrichtungen. Ebenso sei darauf hingewiesen, dass die Signale und/oder Daten der Sensoren / Messeinrichtungen / Erfassungseinrichtungen und/oder dergl. jeweils als Rückkoppelung für eine Steuer- und/oder Regelgröße herangezogen werden können.

Es sei noch darauf hingewiesen, dass die Begriffe "Konfigurieren", "Steuern" und "Regeln" und "Konfigurationseinheit" sich auf elektronische und/oder pneumatische und/oder hydraulische Steuerungen oder Regelungen beziehen können, die je nach Ausbildung Steuerungsaufgaben und/oder Regelungsaufgaben übernehmen können. Auch wenn hierin der Begriff "Konfigurieren" verwendet wird, kann damit gleichsam zweckmäßig auch "Steuern" und/oder "Regeln" umfasst sein.

Zur Vermeidung von Wiederholungen sei darauf hingewiesen, dass die erfindungsgemäßen Ausführungsformen und Merkmale in beliebiger Weise und frei kombinierbar sind.

Hinsichtlich der Vorteile und Ausführungsformen des erfindungsgemäßen Verfahrens wird auf die Vorteile und Ausführungsformen des erfindungsgemäßen pneumatischen Düngerstreuers verwiesen.

Alle Merkmale, die für den pneumatischen Düngerstreuer und das Verfahren offenbart sind, können jeweils in korrespondierender Weise untereinander verwendet werden.

Im Sinne der Anmeldung können Merkmale, die im Zusammenhang mit anderen Merkmalen offenbart sind, auch als für sich allein gestellt offenbart angesehen werden. Merkmale, die mittels "und/oder" miteinander verbunden sind, sind für sich alleine und in Kombination mit den weiteren Merkmalen als offenbart zu verstehen.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1: einen pneumatischen Düngerstreuer in einer perspektivischen Ansicht;
- Figur 2: den Düngerstreuer gemäß Figur 1 in einer Seitenansicht;
- Figur 3: eine detaillierte Darstellung eines Teils des pneumatischen Düngerstreuers.

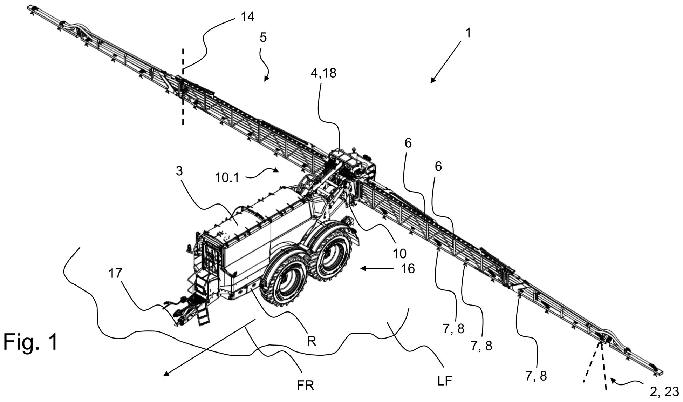

Die in den Figuren 1 bis 3 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

Eine Ausführungsvariante eines pneumatischen Düngerstreuers 1 geht aus den Ansichten der Figuren hervor. Mittels des pneumatischen Düngerstreuers 1 kann zweckmäßig insbesondere körnige, respektive granulare landwirtschaftliche Verteilgüter auf landwirtschaftlichen Flächen LF in gewünschten Mengen ausgebracht, das heißt verteilt werden können. Als Verteilgüter werden bspw. landwirtschaftliche Dünger und/oder Mikrogranulate und/oder Saatgüter und/oder dergl. verteilt.

Der Düngerstreuer 1 ist als eine mittels eines Zugfahrzeugs (z.B. hier nicht dargestellter Traktor) gezogener Düngerstreuer 1 ausgeführt, wobei der Düngerstreuer 1 jedoch auch als ein selbstfahrender oder als ein an einem Zugfahrzeug angebauter Düngerstreuer 1 ausgeführt sein kann. Der Düngerstreuer 1 könnte zudem ein autonomes Fahrzeug (z.B. vollautonom oder teilautonom) sein oder an ein autonomes Trägerfahrzeug angebaut sein.

Der Düngerstreuer 1 umfasst ein die Komponenten des Düngerstreuers 1 tragendes Rahmengestell R, sowie zum Mitführen und/oder Bereitstellen des Verteilguts zumindest einen Vorratsbehälter 3. Es können auch zwei oder mehr Vorratsbehälter 3 für zwei oder mehr, insbesondere unterschiedliche Verteilgüter vorgesehen sein, das heißt insbesondere am Rahmengestell R des Düngerstreuers 1 angebaut sein.

Zur Erreichung einer möglichst großen Schlagkraft, das heißt zur Erreichung einer großen Arbeitsbreite, weist der Düngerstreuer 1 ein sich quer zur Fahrtrichtung FR in großer Arbeitsbreite (z.B. 24 Meter, 30 Meter, 36 Meter oder mehr) erstreckendes Verteilgestänge 5 auf. Wobei das Verteilgestänge 5 einen mit dem Rahmengestell R verbundene Trägereinrichtung 10, ein Gestängemittelteil 11 und schwenkbar gegenüber dem Gestängemittelteil 11 am Gestängemittelteil 10 gelagerte Ausleger 13 aufweist. Bevorzugt weist jeder Ausleger zumindest einen Gestängeabschnitt 12 auf, welche drehbar um aufrecht orientierte Achsen zusammengesetzt sein können. Das Gestängemittelteil 1 kann auch als ein Gestängeabschnitt 12 bezeichnet sein.

Zur Einhaltung einer zulässigen Transportbreite (z.B. 3 Meter in Deutschland) sind die Ausleger 13 um aufrechte orientierte Achsen 14 schwenkbar am Gestängemittelteil 10 gelagert.

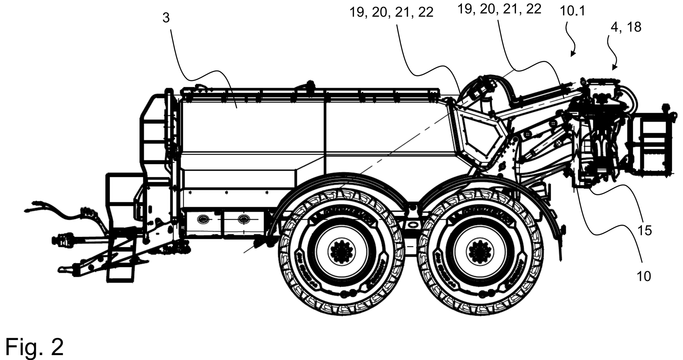

Das Verteilgestänge 5, insbesondere dessen Gestängemittelteil 11, ist mittels einer Lagerung 15, welche gemäß der Figur 2 andeutungsweise dargestellt ist, quer zur Fahrtrichtung FR drehbar um eine in Fahrtrichtung orientierte Drehachse gegenüber dem Rahmengestell R an der Trägereinrichtung 10 angebracht. Die Drehlage kann hierbei insbesondere mittels einer, mittels einer Steuereinrichtung ansteuerbaren, hier nicht dargestellten Stelleinrichtung steuerbar und/oder regelbar sein, wobei die Stelleinrichtung hierbei insbesondere zwischen dem Gestängemittelteil 11 und der Trägereinrichtung 10 und/oder zwischen dem Gestängemittelteil 11 und dem Rahmengestell R gelagert sein kann.

Das Rahmengestell R kann zudem vorzugsweise zweckmäßig insbesondere mehrteilig ausgeführt sein, wobei die Einzelteile wiederum mittels einer unlösbaren (z.B. Schweißen) und/oder lösbaren (z.B. Schrauben oder dergl. Maschinenelemente) Verbindung verbunden sein können.

Das Rahmengestell R umfasst darüber hinaus ein Laufräder aufweisendes Fahrwerk 16, welches gemäß der Ausführungsbeispiele insbesondere ein Tandemfahrwerk sein kann sowie zur Verbindung mit einem Zugfahrzeug eine Verbindungseinrichtung 17. Zudem ist der Vorratsbehälter 3 Bestandteil des Rahmengestells R.

Zur Einstellung der Höhenlage des Verteilgestänges 5 ist die Trägereinrichtung 10 mittels einer Höhenverstelleinrichtung 10.1, beispielsweise eines Parallelogramms höhenverstellbar am Rahmengestell R gelagert.

Dem Gestängemittelteil 11 des Verteilgestänges 5 ist eine Dosiervorrichtung 4 mit einem Dosierbehälter 18 zugeordnet, insbesondere bilden diese eine bauliche Einheit. In den Dosierbehälter 18 mündet eine Fördereinrichtung 19, welche eine Förderleitung umfasst, es könnten jedoch auch mehrerer Förderleitungen und/oder Fördereinrichtungen 20 in den Dosierbehälter 18 münden um diesem somit ein, zwei oder mehr verschiedene Streugüter zuführen zu können.

Bevorzugt verjüngen sich sowohl der Vorratsbehälter 3 als auch der Dosierbehälter 18 nach unten hin trichterförmig, wobei jeweils an der tiefsten Stelle zumindest eine Auslassöffnung (hier nicht gezeigt) angeordnet ist.

Die Auslassöffnung ist durch eine Öffnung in dem jeweiligen Behälter 3, 18 gebildet, durch welche beispielsweise Verteilgut aus dem Vorratsbehälter 3 in die Fördereinrichtung 19 und/oder aus dem Dosierbehälter 18 in die Dosiereinrichtung 4 weitergeleitet wird, wodurch die Auslassöffnung somit gleichzeitig den Einlass der Fördereinrichtung 19 und/oder die Dosiereinrichtung 4 bildet.

Das Verteilgut von der Dosiereinrichtung 4 wird zu den am Verteilgestänge 5 angebrachten Verteilelementen 8 mittels Verteilleitungen 6 entlang des Verteilgestänges 5 gefördert. Das Verteilgut wird im Betrieb des Düngerstreuers 1 entlang der Verteilleitungen 6 mittels eines Luftvolumenstrom befördert, wobei hierfür die Verteilleitungen 6 mittels einer Strömungserzeugungseinrichtung (z.B. ein oder mehrere Gebläse wie bspw. Zentrifugalgebläse, Radialgebläse, Axialgebläse, Diagonalgebläse, Querstromgebläse oder dergl.) gekoppelt, das heißt wirkverbunden sind.

Entlang dem Verteilgestänge 5 ist eine Mehrzahl an Verteilleitungen 6 angebracht, an welchen gemäß der Ausführungsbeispiele jeweils ein Verteilelement 8 angebracht ist, es wären jedoch auch zwei oder mehr Verteilelemente 8 je Verteilleitung 6 denkbar oder möglich, wobei gemäß den Figuren jede Verteilleitung 6 ein Verteilelement 8 aufweist, welches dem jeweiligen äußeren Ende, welches eine Auslassöffnung 7 bildet, der Verteilleitung 6 zugeordnet ist. Die Verteilleitungen 6 weisen zudem, ausgehend von der Dosiereinrichtung 4 unterschiedliche Längen auf, das heißt das diese sich in unterschiedlichen Längen von der Dosiereinrichtung 4 entlang des Verteilgestänge 5 erstrecken.

Um ein kompakt bauende Verteilgestänge 5 zu erreichen, sind die Verteilleitungen 6 zudem übereinander angeordnet, das heißt, dass eine Vielzahl an Verteilleitungen 6 übereinander angeordnet sind.

Die Verteilleitungen 6 sind darüber hinaus in Bezug auf das Gestängemittelteil 11 im Wesentlichen symmetrisch zueinander am Verteilgestänge 5 angebracht. Zudem weisen die jeweils gegenüberliegenden Verteilelemente 8 jeweils eine zumindest weitgehend gleiche Höhenposition auf.

Die Verteilleitungen 6 weisen darüber hinaus, zwischen dem Gestängemittelteil 11 und den Auslegern 13 bzw. zwischen den Gestängeabschnitten 12 der Ausleger 13 jeweils, hier nicht dargestellte Trennstellen auf.

Die Verteilelemente 8 können insbesondere durch Prallteller gebildet sein, gegen welche Prallteller jeweils das Verteilgut mittels des Luftvolumenstrom gefördert und anschließend mittels des Pralltellers bspw. fächerförmig verteilt wird, je nachdem wie der Prallteller ausgebildet ist. Die Verteilelementen 8 können jedoch auch durch einen bogenförmigen Endbereich der Verteilleitungen 6 gebildet sein, welche bspw. somit wiederum als Prallteller wirken können.

Die Abstände der Verteilelemente 8 zueinander können insbesondere derartig sein, dass mittels den von den Verteilelementen 8 erzeugten Streufächer jeweils eine ganzflächige Verteilung von Verteilgut ermöglicht wird, insbesondere eine lückenlose Verteilteilung von Verteilgut ermöglicht wird.

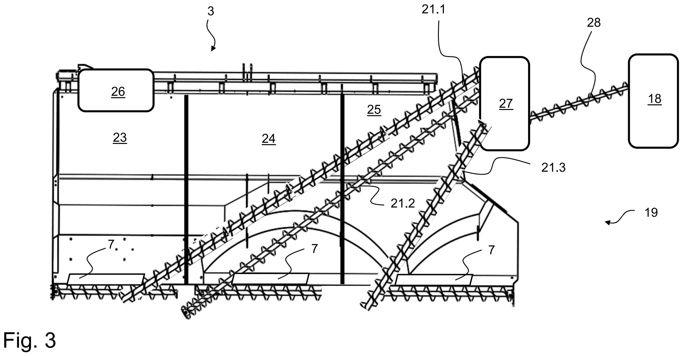

Gemäß einer alternativen Ausführungsvariante wäre es zudem denkbar, dass die Verteilelemente 8 derartig am Verteilgestänge 5 angeordnet sind oder dass die mittels der Verteilelemente 8 erzeugten Streufächer derartig sind, dass sich die Streufächer überlappen. So kann bspw. eine doppelte oder dreifache Überlappung der Streufächer vorgesehen sein, wodurch wiederum die Verteilqualität erhöht werden kann, wie in Figur 3 dargestellt ist.

Zur Versorgung der Dosiereinrichtung 4 mit dem jeweiligen Verteilgut ist diese mit dem zumindest einem Vorratsbehälter 3 wirkverbunden, wobei die Wirkverbindung mittels einer Fördereinrichtung 19 mit bspw. einer Förderleitung 20 und mittels des Dosierbehälters 18 erfolgen kann.

Die Fördereinrichtung 19 gemäß der Ausführungsbeispiele umfasst eine in den Dosierbehälter 18 mündende Förderleitung 20, respektive Fördereinrichtung 20, es könnten jedoch auch zwei oder mehr Förderleitungen 20, insbesondere für verschiedene Streugüter vorgesehen sein.

Die Fördereinrichtung 19, respektive die Förderleitung 20 ist zumindest zweigeteilt, das heißt, mehrere Förderabschnitte 21, 22 aufweist.

Die Fördereinrichtung 19 und/oder die Förderabschnitte 21, 22 kann durch eine oder mehrere Förderschnecken und/oder Förderbänder und/oder dergl. gebildet sein.

Alternativ oder ergänzend kann die Fördereinrichtung 19 zudem, zumindest abschnittweise durch eine pneumatische Fördereinrichtung gebildet sein, bei welchem Verteilgut mittels eines Luftvolumenstrom entlang der Förderleitung 20 gefördert wird.

Die Dosiereinrichtung 4 ist dem Gestängemittelteil 11 und/oder der Trägereinrichtung 10 derartig zugeordnet, dass diese den Höhenbewegungen und/oder den Drehbewegungen des Verteilgestänge 5 zumindest weitgehend synchron folgen.

Bevorzugt ist es vorgesehen, dass der pneumatische Düngerstreuer 1 zumindest umfasst, ein Komponenten des Düngerstreuers 1 tragendes Rahmengestell R, einen Vorratsbehälter 3 zum Mitführen und Bereitstellen des Verteilguts (z.B. Saatgut, Dünger und/oder dergl.), ein sich quer zur Fahrtrichtung FR erstreckendes Verteilgestänge 5 , welches Verteilgestänge 5 eine Trägereinrichtung 10 , ein Gestängemittelteil 11 und drehbar am Gestängemittelteil 11 angebrachte Ausleger 13 aufweist, wobei am Verteilgestänge 5 Verteilleitungen 6 mit Verteilelementen 8 und ein mit dem Vorratsbehälter 3 mittels der Fördereinrichtung 19 wirkverbundener Dosierbehälter 18 angebracht sind, wobei zur Förderung des Verteilguts entlang der Verteilleitungen 6 zu den Verteilelementen 8 die Verteilleitungen 6 mit einem Luftvolumenstrom beaufschlagbar sind und wobei mittels zumindest einer, mit dem Verteilgestänge 5 eine baulich Einheit bildenden und mit dem Dosierbehälter 18 wirkverbundenen Dosiereinrichtung 4, Verteilgut in die Verteilleitungen 6 dosierbar ist.

In der Figur 3 ist schematisch eine Darstellung eines Teils des erfindungsgemäßen Düngerstreuers 1 gezeigt, wobei der Vorratsbehälter 3 zumindest zwei Kammern 23, 24, 25 aufweist, vorliegend drei Kammern 23, 24, 25. Jede der Kammern 23, 24, 25 weist zumindest eine Auslassöffnung 7 auf, welche lediglich schematisch dargestellt ist.

Die Auslassöffnungen 7 der Kammern 23, 24, 25 sind mit der Fördereinrichtung 19 gekoppelt. Erfindungsgemäß ist es vorgesehen, dass die Fördereinrichtung 19 mittels einer Konfigurationseinheit 26 anhand eines Mengenverhältnisses veränderbar ist. Das Mengenverhältnis beschreibt, wieviel Menge an Verteilgut aus jeder der Kammern 23, 24, 25 entnommen und gefördert werden soll, so dass die jeweiligen Mengen aus jeder der Kammern 23, 24, 25 das Mengenverhältnis beschreiben. Dadurch, dass sich das Mengenverhältnis verändern kann, beispielsweise durch eine Veränderung der Aufwandmenge, also der insgesamt abzugebenden Menge, der Zusammensetzung der abzugebenden Menge, ein sich verändernder Pflanzenbestand, und/oder dergleichen, ist die Konfigurationseinheit 26 eingerichtet, die Fördereinrichtung 19 zu verändern.

Vorliegend weist die zumindest eine Fördereinrichtung drei Förderabschnitte 21.1, 21.2, 21.3 auf, wobei jeder der Förderabschnitte 21.1, 21.2, 21.3 mit einer der Kammern 23, 24, 25, insbesondere der Auslassöffnung 7, gekoppelt ist und eingerichtet ist, das Verteilgut aus der Kammer 23, 24, 25 zu fördern. Vorliegend ist jeder der drei Förderabschnitte 21.1, 21.2, 21.3 als ein Schneckenförderer ausgebildet.

Vorliegend ist es vorgesehen, dass die Förderabschnitte 21.1, 21.2, 21.3 mit einer Mischkammer 27 gekoppelt sind und eingerichtet sind, das Verteilgut in die Mischkammer 27 zu fördern. Vorliegend ist die Mischkammer 27 ein separater Behälter, kann aber auch durch den Dosierbehälter 18 gebildet sein.

Bevorzugt ist die Mischkammer 27 eingerichtet, das von den Förderabschnitten 21.1, 21.2, 21.3 geförderte Verteilgut zu vermischen.

Weiter ist eine Fördereinheit 28 vorgesehen, welche eingerichtet ist, das vermischte Verteilgut aus der Mischkammer 27 zu dem Dosierbehälter 18 zu fördern. Falls der Dosierbehälter 18 auch die Mischkammer 27 ist, kann die Fördereinheit 28 entfallen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.
- 1: pneumatischer Düngerstreuer
- 2: Verteilgut
- 3: Vorratsbehälter
- 4: Dosiereinrichtung
- 5: Verteilgestänge
- 6: Verteilleitung
- 7: Auslassöffnung
- 8: Verteilelement
- 9: Strömungserzeugungseinrichtung
- 10: Trägereinrichtung
- 10.1: Höhenverstelleinrichtung
- 11: Gestängemittelteil
- 12: Gestängeabschnitt
- 13: Ausleger
- 14: aufrecht orientierte Achse
- 15: Lagerung
- 16: Fahrwerk
- 17: Verbindungseinrichtung
- 18: Dosierbehälter
- 19: Fördereinrichtung
- 21.1, 21.2, 21.3: Förderabschnitt
- 23, 24, 25: Kammer
- 26: Konfigurationseinheit
- 27: Mischkammer
- 28: Fördereinheit

## Patentansprüche

1. Pneumatischer Düngerstreuer (1) zum Ausbringen von körnigem Verteilgut auf eine landwirtschaftliche Fläche (LF), zumindest umfassend einen Vorratsbehälter (3) zum Mitführen und/oder Bereitstellen des Verteilguts, wobei der Vorratsbehälter (3) zumindest zwei Kammern (23, 24, 25) mit jeweils zumindest einer Auslassöffnung (7) aufweist, wobei die Auslassöffnungen (7) mit zumindest einer, mittels einer Konfigurationseinheit (26) veränderbaren, Fördereinrichtung (19) gekoppelt sind, und wobei in der Konfigurationseinheit (26) ein Mengenverhältnis an Verteilgut hinterlegbar ist, **dadurch gekennzeichnet, dass**
die Konfigurationseinheit (26) eingerichtet ist, die zumindest eine veränderbare Fördereinrichtung (19) anhand des Mengenverhältnisses zu verändern.

2. Pneumatischer Düngerstreuer (1) nach Anspruch 1, **dadurch gekennzeichnet, dass** die Konfigurationseinheit (26) eingerichtet ist, anhand des Mengenverhältnisses eine Entnahme von Verteilgut aus den jeweiligen Kammern (23, 24, 25) durch ein Verändern der zumindest eine veränderbaren Fördereinrichtung (19) zu verändern.

3. Pneumatischer Düngerstreuer (1) nach zumindest einem der Ansprüche 1 bis 2, **dadurch gekennzeichnet, dass** die zumindest zwei Kammern (23, 24, 25) mittels der zumindest einen veränderbaren Fördereinrichtung (19) derart gekoppelt sind, dass die Verteilgüter der zumindest zwei Kammern (23, 24, 25) vermischbar sind.

4. Pneumatischer Düngerstreuer (1) nach zumindest einem der Ansprüche 1 bis 3, **dadurch gekennzeichnet, dass** in den zumindest zwei Kammern (23, 24, 25) das gleiche Verteilgut und/oder unterschiedliche Verteilgüter bereitstellbar sind.

5. Pneumatischer Düngerstreuer (1) nach zumindest einem der Ansprüche 1 bis 4, **dadurch gekennzeichnet, dass** die zumindest eine Fördereinrichtung (19) zumindest eine Dosiereinrichtung (4) umfasst, wobei die Dosiereinrichtung (4) eingerichtet ist, Verteilgut in Verteilleitungen (6) eines Verteilgestänges (5) zu dosieren, vorzugsweise anhand des Mengenverhältnisses.

6. Pneumatischer Düngerstreuer (1) nach zumindest Anspruch 5, **dadurch gekennzeichnet, dass** die zumindest eine Dosiereinrichtung (4) räumlich dem Verteilgestänge (5) zugeordnet ist, vorzugsweise mit dem Verteilgestänge (5) gekoppelt ist.

7. Pneumatischer Düngerstreuer (1) nach zumindest einem der Ansprüche 5 bis 6, **dadurch gekennzeichnet, dass** das Verteilgestänge (5) eine Trägereinrichtung (10) umfasst, wobei die Trägereinrichtung (10) mit einem Rahmengestell (R) des Düngerstreuers (1) gekoppelt ist, wobei die Trägereinrichtung (10) eingerichtet ist, mittels einer Höhenverstelleinheit höhenverstellbar zu sein.

8. Pneumatischer Düngerstreuer nach zumindest Anspruch 7, **dadurch gekennzeichnet, dass** das Verteilgestänge (5) ein Gestängemittelteil (11) umfasst, welches drehbar um eine in Fahrtrichtung (FR) orientierte Drehachse mit der Trägereinrichtung (10) gekoppelt ist.

9. Pneumatischer Düngerstreuer (1) nach zumindest einem der Ansprüche 1 bis 8, **dadurch gekennzeichnet, dass** die Konfigurationseinheit (eingerichtet ist, die zumindest eine Fördereinrichtung anhand einer definierbaren Ausbringmenge und/oder einer Ist-Geschwindigkeit des Düngerstreuers zu verändern.

10. Pneumatischer Düngerstreuer nach zumindest einem der Ansprüche 1 bis 9, **dadurch gekennzeichnet, dass** die Konfigurationseinheit (26) eingerichtet ist, das Mengenverhältnis durch manuelle Vorgabe zu erhalten, und/oder dass die Konfigurationseinheit (26) eingerichtet ist, automatisch das Mengenverhältnis zu verändern, vorzugsweise anhand einer teilflächenspezifischen Vorgabe und/oder einer mit dem Düngerstreuer (1) gekoppelten Sensorik.

11. Pneumatischer Düngerstreuer (1) nach zumindest einem der Ansprüche 1 bis 10, **dadurch gekennzeichnet, dass** die Konfigurationseinheit (26) eingerichtet ist, das Mengenverhältnis anhand einer Ist-Position des pneumatischen Düngerstreuers (1) zu verändern.

12. Verfahren zum Fördern von Verteilgütern, umfassend die Verfahrensschritte:
- Bereitstellen eines pneumatischen Düngerstreuers (1) umfassend einen Vorratsbehälter (3) mit zumindest zwei Kammern (23, 24, 25) mit jeweils einer Auslassöffnung (7), welche mit zumindest einer Fördereinrichtung (19) gekoppelt sind, und Hinterlegen eines Mengenverhältnisses von Verteilgut;
- Verändern der zumindest einen Fördereinrichtung (19) anhand des Mengenverhältnisses mittels einer Konfigurationseinheit (26).
